# EUROPEAN PATENT SPECIFICATION

(11) **EP 3 651 900 B1**
(45) Date of publication and mention of the grant of the patent: **20.05.2026**
(21) Application number: 18753275.9
(22) Date of filing: 09.07.2018
(51) Int. Cl.: B01D 53/86, B01D 53/94, B01J 35/40, B01J 29/76, B01J 29/80

(54) **A CATALYST AND METHOD OF USE THEREOF**
KATALYSATOR UND VERFAHREN ZUR VERWENDUNG DAVON
CATALYSEUR ET SON PROCÉDÉ D'UTILISATION

(30) Priority: 11.07.2017 US 201762530877 P
(43) Date of publication of application: 20.05.2020
(73) Proprietor: Shell Internationale Research Maatschappij B.V., 2596 HR The Hague (NL)
(72) Inventor: ZHANG, Wenzhong, Katy Texas 77494 (US); BAKKER, Geert Marten, 1031 HW Amsterdam (NL); LEE, Steven Russell, Shenandoah Texas 77381 (US)
(74) Representative: Shell Legal Services IP
(86) International application number: PCT/US2018/041279
(87) International publication number: WO 2019/014119

(56) References cited:
- EP-A2- 2 520 365
- US-A1- 2011 286 914
- US-A1- 2015 290 632
- US-A1- 2016 367 939
- FENG GAO ET AL: "Iron Loading Effects in Fe/SSZ-13 NH 3 -SCR Catalysts: Nature of the Fe Ions and Structure-Function Relationships", ACS CATALYSIS, vol. 6, no. 5, 8 April 2016 (2016-04-08), US, pages 2939 - 2954, XP055513461, ISSN: 2155-5435, DOI: 10.1021/acscatal.6b00647
- NURIA MARTÍN ET AL: "Fe-Containing Zeolites for NH 3 -SCR of NO x : Effect of Structure, Synthesis Procedure, and Chemical Composition on Catalytic Performance and Stability", CHEMISTRY - A EUROPEAN JOURNAL, vol. 23, no. 54, 29 August 2017 (2017-08-29), DE, pages 13404 - 13414, XP055512380, ISSN: 0947-6539, DOI: 10.1002/chem.201701742

## Description

### Field of the Invention

The invention relates to a method of reducing the NO_{X} concentration in a process gas stream using that catalyst.

### Background of the Invention

Nitric oxides are known polluting gases and efforts have been made to limit the amount of these compounds entering the atmosphere. These are found in exhaust gases and process gas streams in a number of industrial processes. In addition, these are found in the exhaust gases of mobile vehicles; cars, trucks, buses, etc. Selective catalytic reduction is a known method for removing these compounds from process gas streams by converting nitric oxides to nitrogen and water.

EP 2 520 365 A2 discloses a selective catalytic reduction catalyst for converting NOₓ present in exhaust gas emitted from a mobile source in the presence of a nitrogenous reductant.

US 2016/0367939 A1 discloses a method of converting nitrogen oxides in a gas to nitrogen.

US 20110286914 discloses an organic-free, metal-containing zeolite Beta with a silica-to-alumina ratio ranging from 5 to 20, and a metal content of at least 0.5 wt%. The published patent application also discloses a method of selective catalytic reduction of nitrogen oxides in exhaust gases using the zeolite Beta.

US 20130142727 discloses a microporous crystalline material having a pore opening ranging from 3 to 5 Angstroms, where the material comprises a first metal chosen from alkali earth group, rare earth group, alkali group, or mixtures thereof, and a second metal chosen from iron, copper or mixtures thereof; and has a molar silica to alumina ratio from 3 to 10. The published patent application also discloses a method of selective catalytic reduction of nitrogen oxides in exhaust gas.

It is advantageous to develop improved catalysts that are more effective and more stable in this reaction so that the units can be operated over a longer duration without maintenance or catalyst replacement.

### Summary of the Invention

The invention provides a method of reducing the NO_{X} concentration in a process gas stream comprising contacting the process gas stream with a catalyst comprising iron chabazite and iron beta zeolite under NO_{X} conversion conditions. Preferred NO_{X} conversion conditions include a high temperature.

The invention provides a method for the conversion of NO_{X} comprising using iron chabazite and iron beta zeolite.

### Brief Description of the Figures

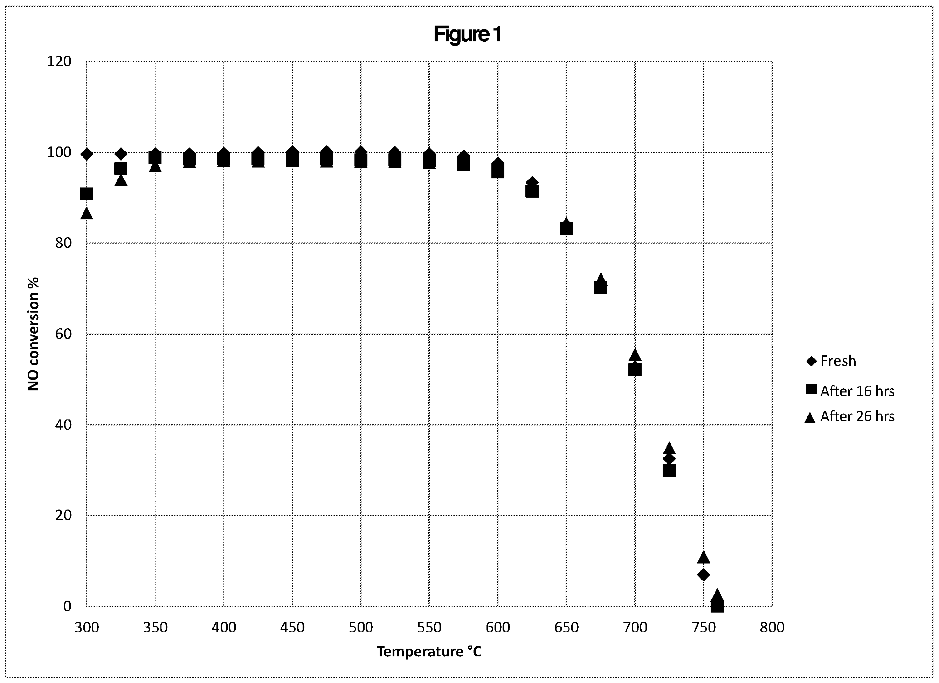

Figure 1 depicts the NO_{X} conversion of a catalyst comprising iron chabazite and iron beta zeolite under varying conditions.

### Detailed Description of the Invention

The invention provides an improved method for the conversion of NO_{X}. The catalyst comprises iron chabazite and iron beta zeolite.

The beta zeolite is preferably made without an organic structure directing agent. The resulting beta zeolite does not contain any residual organic materials in the pores of the material, and thus the treatments usually required to remove the organic components are not needed. In prior art catalysts, organic structure directing agents, such as tetraethylammonium hydroxide, dibenzylmethylammonium, and dibenzyl-dimethyl ammonium hydroxide, were used in the precursor materials. The cost of these compounds and the fact that they usually remain in the pores after manufacture is a problem in the synthesis of these iron beta zeolite materials.

The beta zeolite preferably has a silica-to-alumina ratio of from 5 to 20. The silica-to-alumina ratio is preferably not more than 12, and more preferably in a range of from 5 to 11. The beta zeolite preferably has an average crystal size of greater than 0.1 microns, more preferably of from 0.2 to 5 microns.

The iron beta zeolite made using the above described beta zeolite preferably comprises at least 0.5 wt% iron, more preferably from 1 to 10 wt% iron. The catalyst may also contain alumina.

The iron is preferably added to the catalyst components (chabazite and beta zeolite) by one or more methods, including liquid phase or solid ion exchange, impregnation or incorporation by direct synthesis. In a preferred embodiment, the iron is preferably added by ion exchange.

The iron used in the ion exchange method is typically an iron salt and it may be ferric nitrate, ferric chloride, ferrous chloride, ferrous sulfate or mixtures thereof.

One method for making the beta zeolite starts with making an aqueous solution comprising NaOH and a source of alumina. The alumina source may be sodium aluminate, aluminum hydroxide, alumina, aluminum nitrate, aluminum alcoholates, or aluminum sulfate. Then a source of silica is added to the solution. The silica may comprise a silica gel, silica sol, silica hydrosols, fumed silica, reactive amorphous solid silicas, silicic acid, water glass, sodium silicate, sodium metasilicate, colloidal silicate, pyrogenic silica, precipitated silicate, silica alumina and other similar materials. Then a source of beta zeolite is added and the mixture is mixed to form a gel. The source of beta zeolite may be a commercially available beta zeolite. The gel is heated to form a product and this step is carried out until the desired crystal size and purity are achieved. The heating may comprise heating the gel at a temperature ranging from 100 to 200 °C for up to 200 hours. Once the crystallized material is formed, it may be treated by isolation, washing and drying. The isolation may be carried out by any method known to one of skill in the art, including filtration, centrifugation or decantation. The washing may be carried out with any known agent including water or alcohols. Additionally, sodium may be removed from the zeolite, by, for example, ion exchange.

In another embodiment, the beta zeolite may be made by preparing a mixture of seed crystals, a source of SiO₂ and a source of Al₂O₃ and crystallizing the mixture. The seed crystals may be beta zeolite crystals.

The chabazite is preferably also made without an organic structure directing agent. This provides similar benefits as described above with regards to the iron beta zeolite. The chabazite may be made by mixing sources of sodium, potassium, alumina, silica, and water to form a gel and then heating the gel at a temperature in the range of from 80 to 200 °C. The crystalline product formed can then be ammonium-exchanged.

The chabazite prepared without an organic structure directing agent preferably has a pore opening of from 3 to 5 Angstroms. The chabazite preferably has a silica-to-alumina ratio of from 3 to 10. The iron chabazite preferably has an average crystal size of from 0.3 to 10 microns, preferably from 0.3 to 5.0 microns.

The iron chabazite made using the above described chabazite preferably comprises from 0.5 to 5.0 wt% iron. The iron may be added by liquid phase or solid ion exchange. Alternatively, the iron may be added by impregnation or may be added during the zeolite synthesis steps.

The catalyst comprising iron chabazite and iron beta zeolite may be in the form of channeled or honeycomb, metal plate type or corrugated plate type catalyst. Alternatively, the catalyst may be present as a packed bed, which may comprise balls, pebbles, pellets, tablets or extrudates. The catalyst may be present in the form of microspheres.

The catalyst may be formed by creating a slurry of a fine powder of the zeolite materials, which is then admixed with a suitable binder. The binder may comprise alumina, bentonite, silica or silica-alumina. The slurry may then be deposited on a suitable substrate in the form of a honeycomb or other shape with a plurality of channels.

The catalyst may comprise a blend of iron chabazite and iron beta zeolite, a plurality of layers where each layer comprises an individual iron chabazite or iron beta zeolite component or a plurality of zones where each zone comprises an individual iron chabazite or iron beta zeolite component. A blend of the catalysts may comprise a volume of both the iron chabazite and the iron beta zeolite having approximately the same proportions relative to one another throughout the volume of the blend. In another embodiment, the blend of catalysts may be disposed in a plurality of layers or zones.

The catalyst can be used in a method for reducing the NOx concentration in a process gas stream. In the process, the process gas stream is contacted with the catalyst under conversion conditions. The conversion conditions may include a temperature in the range of from 250 to 650 °C.

Ammonia, urea, or an ammonia generating compound may be added to the process gas before or at the same time as the process gas is contacted with the catalyst. The ammonia generating compound may be ammonium carbamate, ammonium formate, ammonium carbonate or metal-amine complexes.

In addition to ammonia, the contacting may be carried out in the presence of water. The water may be present in an amount of at least 0.5 vol.%, preferably at least 2 vol %, calculated as a percentage of the combined process gas, ammonia, and water stream.

### Examples

### Example 1

This example demonstrates the impact of hydrothermal aging on a catalyst comprising both iron chabazite and iron beta zeolite. The NOx conversion of the fresh catalyst was measured at a number of temperatures from 300 to 750 °C. The catalyst was subsequently hydrothermally aged by contacting with an 11% H₂O stream for 16 hours at 760 °C. The NOx conversion of the aged catalyst was measured at a number of temperatures from 300 to 750 °C. The catalyst was further hydrothermally aged by contacting with an 11% H₂O stream for an additional 10 hours (for a total of 26 hours). The NOx conversion of the catalyst was measured at a number of temperatures from 300 to 750 °C.

The NOx conversion of the fresh, aged and further aged catalyst are shown in Figure 1. As can be seen from the figure, the impact of hydrothermal aging on the catalyst performance is negligible. The catalyst of the invention demonstrates improved hydrothermal stability compared to other catalysts.

## Claims

1. A method of reducing the NOx concentration in a process gas stream comprising contacting the process gas stream with a catalyst comprising iron chabazite and iron beta zeolite under NO_{X} conversion conditions.

2. The method of claim 1 wherein the conversion conditions comprise a temperature in the range of from 250 to 700 °C, preferably in the range of from 325 to 675 °C, more preferably in the range of from 480 to 650 °C.

3. The method of claim 1 further comprising adding ammonia, urea or an ammonia generating compound to the process gas before or at the same time as the process gas is contacted with the catalyst.

4. The method of claim 3 wherein the ammonia generating compound is selected from the group consisting of ammonium carbamate, ammonium formate, ammonium carbonate and metal-amine complexes.

5. The method of claim 1 wherein the contacting is carried out in the presence of at least 0.5 vol % water, preferably at least 2 vol % water.

## Patentansprüche

1. Verfahren zum Reduzieren der NOx-Konzentration in einem Prozessgasstrom, umfassend ein Inberührungbringen des Prozessgasstroms mit einem Katalysator, umfassend Eisen-Chabazit und Eisen-Beta-Zeolith, unter NOx-Umwandlungsbedingungen.

2. Verfahren nach Anspruch 1, wobei die Umwandlungsbedingungen eine Temperatur in dem Bereich von 250 bis 700 °C, vorzugsweise in dem Bereich von 325 bis 675 °C, mehr bevorzugt in dem Bereich von 480 bis 650 °C, umfassen.

3. Verfahren nach Anspruch 1, ferner umfassend ein Hinzufügen von Ammoniak, Harnstoff oder einer Ammoniak erzeugenden Verbindung zu dem Prozessgas vor oder zu der gleichen Zeit, zu der das Prozessgas mit dem Katalysator in Berührung gebracht wird.

4. Verfahren nach Anspruch 3, wobei die Ammoniak erzeugende Verbindung aus der Gruppe ausgewählt ist, bestehend aus Ammoniumcarbamat, Ammoniumformiat, Ammoniumcarbonat und Metall-Amin-Komplexen.

5. Verfahren nach Anspruch 1, wobei das Inberührungbringen in der Gegenwart von mindestens 0,5 Vol.-% Wasser, vorzugsweise mindestens 2 Vol.-% Wasser, durchgeführt wird.

## Revendications

1. Procédé de réduction de la concentration de NOx dans un courant de gaz de procédé comprenant la mise en contact du courant de gaz de procédé avec un catalyseur comprenant de la chabazite de fer et de la zéolite bêta de fer dans des conditions de conversion des NOx.

2. Procédé selon la revendication 1 dans lequel les conditions de conversion comprennent une température dans la plage de 250 à 700 °C, de préférence dans la plage de 325 à 675 °C, plus préférablement dans la plage de 480 à 650 °C.

3. Procédé selon la revendication 1 comprenant en outre l'ajout d'ammoniac, d'urée ou d'un composé générateur d'ammoniac au gaz de procédé avant ou au moment où le gaz de procédé est mis en contact avec le catalyseur.

4. Procédé selon la revendication 3 dans lequel le composé générateur d'ammoniac est choisi dans le groupe constitué de carbamate d'ammonium, formiate d'ammonium, carbonate d'ammonium et complexes métal-amine.

5. Procédé selon la revendication 1 dans lequel la mise en contact est réalisée en présence d'au moins 0,5 % en volume d'eau, de préférence d'au moins 2 % en volume d'eau.
